# EUROPÄISCHE PATENTSCHRIFT

(11) **EP 0 430 888 B1**
(45) Veröffentlichungstag und Bekanntmachung des Hinweises auf die Patenterteilung: **06.04.1994**
(21) Anmeldenummer: 90810910.1
(22) Anmeldetag: 22.11.1990
(51) Int. Cl.: C09C 1/00, C08K 3/24, C09D 7/12

(54) **Verfahren zur Herstellung von Wismuthvanadatpigmenten sowie farbstarke Wismuthvanadatpigmente**
Process for preparing bismuth vanadate pigments and bismuth vanadate pigments of high tinting strength
Procédé de préparation de pigments de vanadate de bismuth et pigments de vanadate de bismuth à pouvoir colorant élevé

(30) Priorität: 30.11.1989 CH 4301/89
(43) Veröffentlichungstag der Anmeldung: 05.06.1991
(73) Patentinhaber: CIBA-GEIGY AG, 4002 Basel (CH)
(72) Erfinder: Erkens, Leonardus Johannes Hubertus, NL-6213 CK Maastricht (NL); Schmitt, Gregor, NL-6372 NE Landgraaf (NL); Geurts, Herman Joseph Johannes Maria, NL-6229 HK Maastricht (NL); Corvers, Werner Franciscus Cornelus Gerardus, NL-6211 BG Maastricht (NL)

(56) Entgegenhaltungen:
- EP-A- 0 239 526

## Beschreibung

Die Erfindung betrifft ein verbessertes Verfahren zur Herstellung von Wismuthvanadatpigmenten, sowie neue farbstarke deckende Wismuthvanadatpigmente.

Wismuthvanadate stellen bekannte Verbindungen dar, ihre Verwendung als Pigmente zum Einfärben von hochmolekularem organischem Material ist auch bekannt. So wird beispielsweise in den US-Patentschriften Nr. 4,115,141 und Nr. 4,115,142 Wismuthvanadat als pigmentäre, leuchtend schlüsselblumengelbe Verbindung zum Einfärben von Kunststoffen und Lacken beschrieben. Gemäss diesen Patentschriften liegt das Wismuthvanadat vollständig in der monoklinen Kristallmodifikation (β-Fergusonit) vor. Die Herstellung dieser Verbindung erfolgt so, dass aus löslichen Wismuth- und Vanadium- Verbindungen zuerst ein gelartiger Vorläufer ausgefällt wird, welcher dann entweder durch eine Hitzebehandlung bei 200-500°C oder durch eine unter bestimmten Bedingungen durchgeführte wässrige Nachbehandlung in die kristalline, pigmentäre Form übergeführt wird.

Weiterhin werden in der US-Patentschrift Nr. 4,455,174 Wismuthvanadat/Molybdat- bzw. Wismuthvanadat/Wolframat-Derivate als gelbe Pigmente vorgeschlagen. Dabei handelt es sich um mehrphasige Produkte, die aus einer Wismuthvanadat-Phase sowie einer Wismuthmolybdat- und/oder einer Wismuthwolframat-Phase bestehen.

In der US-Patentschrift Nr. 4,316,746 sind zudem Wismuthvanadat/Molybdat- und Wismuthvanadat/Wolframat-Pigmente beschrieben, die im Falle der Wismuthvanadat/Molybdate aus einer kristallinen Phase mit tetragonaler scheelitartiger Struktur bestehen, während im Falle der Wismuthvanadat/Wolframate zweiphasige Produkte vorliegen.

Weitere Wismuthvanadatpigmente werden im US-Patent Nr. 4,752,460 beschrieben, wobei dort feste Lösungen von Wismuthvanadat mit bestimmten Anteilen an Molybdat und/oder Wolframat offenbart sind.

Die dort beschriebenen Wismuthvanadate lassen sich nach zwei verschiedenen Verfahren herstellen. Ein Verfahren besteht darin, dass die Synthese ausgehend von den benötigten Metalloxiden durch Festkörperreaktion bei erhöhter Temperatur erfolgt. (vgl. z.B. US-Patente Nr. 4,063,956 und Nr. 4,316,746). Dabei werden die benötigten Metalloxide trocken zusammen gemischt, und das erhaltene Gemisch wird dann einer Hitzebehandlung bei 300-700°C unterworfen, so dass dabei eine kristalline, pigmentäre Form entsteht. Es kann aber auch zuerst ein gelartiges Wismuthvanadatderivat -oft Vorläufer genannt - ausgefällt werden, welches dann nach Filtrieren, salzfreiem Waschen und Trocknen einer anschliessenden Hitzebehandlung, wie oben erwähnt, unterworfen wird.

Das zweite in der US 4,752,460 offenbarte Verfahren besteht darin, dass das Wismuthvanadatpigment aus einer wässrigen Lösung eines Wismuth-III-Salzes, gegebenenfalls in Gegenwart weiterer Salze, wie Erdalkalimetall- oder Zinksalze, und einer wässrigen Lösung eines Vanadatsalzes, gegebenenfalls in Gegenwart weiterer Salze, wie Molybdat- oder Wolframatsalze, ausgefällt wird. Der so hergestellte Vorläufer wird dann ohne Calzinierung einem Alterungs- und Kristallisationsprozess in wässriger Phase unterworfen. In diesem Dokument wird ferner erwähnt, dass bei der Alterungs- und Kristallisationsstufe zur Steuerung der Kristallisation und der Teilchengrösse der gebildeten Partikel geeignete Zusätze, beispielsweise Chloride, zugefügt werden können (vgl. diesbezüglich Spalte 4, Zeilen 10-12 dieses Dokumentes).

Es wurde nun gefunden, dass die Verwendung bestimmter Ionen bei der Ausfällungs- und/oder Kristallisationsstufe zu Pigmenten mit verbesserten Eigenschaften, insbesondere mit höherer Farbstärke und verbessertem Deckvermögen, führt, währenddem die Verwendung der oben erwähnten Chloride nicht zu derartigen Effekten führt.

Ein Gegenstand der vorliegenden Erfindung ist demnach ein verbessertes Verfahren zur Herstellung von Wismuthvanadatpigmenten und auf Wismuthvanadat basierenden festen Lösungen durch a) Vermischen einer Lösung eines Wismuth-III-Salzes, enthaltend erforderlichenfalls ein oder mehrere weitere Metallsalze oder ein Gemisch davon, mit der wässrigen Lösung eines Vanadatsalzes enthaltend erforderlichenfalls ein Molybdat-, Wolframat- oder Sulfatsalz oder ein Gemisch davon, und b) anschliessende Nachbehandlung der so erhaltenen Suspension zur Umwandlung der zuerst amorph ausgefallenen Partikel in kristalline Verbindungen, dadurch gekennzeichnet, dass während des Vermischens und/oder bei der anschliessenden Nachbehandlungsstufe Fluoridionen verwendet werden.

Weitere Metallsalze sind z.B. Erdalkalimetall- und Zn-Salze.

Erfindungsgemäss herstellbare Wismuthvanadatpigmente sind z.B. monokline Wismuthvanadatpigmente der Formel BiVO₄ gemäss US-Patenten Nr. 4,115,141 und Nr. 4,115,142, Wismuthvanadate enthaltend Molybdat- oder Wolframatanteile gemäss US-Patenten 4,316,746 und 4,455,174, Wismuthvanadatpigmente enthaltend bestimmte Mengen BaSO₄ gemäss der DE-Offenlegungsschrift Nr. 3 004 083, oder insbesondere Wismuthvanadatverbindungen (vgl. oben aufgeführtes US-Patent Nr. 4,752,460), der Formel I

(Bi,A)(V,D)O₄ (I),

worin A ein Erdalkalimetall, Zn oder ein Gemisch davon, und D Mo, W oder ein Gemisch davon bedeuten, und das Molverhältnis A zu Bi zwischen 0,01 und 0,6 und das Molverhältnis D zu V zwischen 0 und 0,4 liegen, wobei man in der verfahrensstufe a) eine Lösung eines Wismuth-III-salzes, enthaltend ein Erdalkalimetall- oder ein Zn-Salz oder ein Gemisch davon, mit der wässrigen Lösung eines Vanadatsalzes enthaltend erforderlichenfalls ein Molybdat- oder Wolframatsalz oder ein Gemisch davon in den oben angegebenen Molverhältnissen vermischt.
Die Verbindungen der Formel I stellen feste Lösungen dar und können je nach chemischer Zusammensetzung verschiedene Kristallmodifikationen aufweisen.

Die Schreibweise (Bi,A) in obiger Formel I ist so zu verstehen, dass das Wismuth als Wismuth-III-Ion vorliegt und teilweise durch das zweiwertige Metallkation A ersetzt wird. Vanadium dagegen liegt als fünfwertiges Vanadiumion in Form von Vanadation vor und kann teilweise durch das sechswertige Metallkation D als Molybdat oder Wolframat oder Gemische davon ersetzt werden.
Bedeutet A ein Erdalkalimetall, so handelt es sich dabei beispielsweise um Be, Mg, Ca, Sr und Ba, insbesondere aber um Ca und Sr.
D ist bevorzugt Mo.

Erfindungsgemäss in Frage kommende Gemische sind Gemische aus mindestens einem Erdalkalimetall und Zn oder Gemische aus verschiedenen Erdalkalimetallen, sowie Gemische aus Mo und W, in beliebigen Molverhältnissen. Bevorzugte Molverhältnisse A zu Bi sind 0,02 bis 0,5 und D zu V sind 0,01 bis 0,3.

Erfindungsgemäss werden bevorzugt Verbindungen der Formel I hergestellt, worin A Ca oder Sr und D Mo oder W bedeuten, und die Molverhältnisse A zu Bi zwischen 0,03 und 0,4, und D zu V zwischen 0,01 und 0,3 liegen.

Besonders bevorzugt ist die Herstellung von Verbindungen der Formel I, worin A Ca und D Mo bedeuten, und die Molverhältnisse Ca zu Bi zwischen 0,03 und 0,4 und Mo zu V zwischen 0,01 und 0,3 liegen.

Wie bereits oben erwähnt, umfasst das erfindungsgemässe Verfahren zwei Stufen: eine Ausfällungsstufe und eine Nachbehandlungsstufe.
Bei der Ausfällung werden die benötigten Ausgangsstoffe als Lösungen in der Form ihrer Ionen vermischt. Die ausgefallenen Partikel (oft Vorläufer genannt) zeigen noch keinerlei Pigmentcharakter, sind röntgenamorph und oft gelartig.
Bei der Nachbehandlungsstufe wird die Fällungssuspension weiter gerührt, so dass dabei die Partikel in eine kristalline Form umgewandelt werden und sich ein Kornwachstum vollzieht. Es ist zweckmässig, die nach der Ausfällungsstufe erhaltenen Partikel nicht zu isolieren (z.B. durch Filtration und Waschen), sondern direkt für die nächste Verfahrensstufe zu verwenden.

Die Ausfällung erfolgt durch Vermischen der Lösung eines Wismuth-III-Salzes, beispielsweise in Salpeter- oder Essigsäure, enthaltend erforderlichenfalls ein oder mehrere weitere Metallsalze, z.B. ein Erdalkalimetall- oder Zinksalz oder ein Gemisch davon, mit der wässrigen Lösung eines Vanadatsalzes enthaltend erforderlichenfalls ein Molybdat-, Wolframat- oder Sulfat-Salz oder ein Gemisch davon.

Die oberen Konzentrationsgrenzen der oben aufgeführten Reaktionslösungen werden durch die Löslichkeit der eingesetzten Salze bestimmt, wobei aber der Einsatz verdünnter Lösungen insbesondere zur besseren Kontrolle des äquimolaren absatzweisen Mischens der erfindungsgemäss in Betracht gezogenen Lösungen vorteilhaft ist. Die Lösungen werden bei zweckmässig 10-100°C, vorzugsweise bei 20-40°C, gemischt.

Wismuth-III-Salzlösungen lassen sich beispielsweise durch Lösen von Wismuthnitrat [z.B. Bi(NO₃)₃·5 H₂O] in beispielsweise 1,0 bis 4,0 N Salpetersäure oder in Essigsäure herstellen. Wässrige Vanadat-Lösungen lassen sich beispielsweise aus Alkalimetallvanadatsalzen [wie beispielsweise Natrium- oder Kaliumvanadatsalze, z.B., NaVO₃ (meta-Vanadat) oder Na₃VO₄ (ortho Vanadat)], Ammoniumvanadat oder durch Auflösen von fünfwertigem Vanadiumoxid in basischer Lösung herstellen. Als Molybdat-, Wolframat- oder Sulfatsalze verwendet man beispielsweise die entsprechenden Natrium-, Kalium- oder Ammoniumsalze, oder man löst die entsprechenden Oxide in basischer Lösung auf.

Geeignete Erdalkalimetall- oder Zinksalze sind beispielsweise die entsprechenden Chloride, Acetate oder Nitrate, oder man löst die entsprechenden Oxide in saurer Lösung auf.

Die Ausfällungsreaktion der vorläufer kann batchweise oder kontinuierlich durchgeführt werden. Bevorzugt erfolgt die Vermischung der Lösungen unter gutem Rühren, gegebenenfalls unter hoher Turbulenz, beispielsweise in einem Fliessreaktor, in einer Mischdüse, gegebenenfalls unter erhöhtem Druck, oder in einer mit einem Hochleistungsrührer versehenen Vorrichtung. Das Vermischen der verschiedenen Reaktionslösungen kann sowohl kontinuierlich durch gleichzeitige Zuführung als auch diskontinuierlich durch Vorlage der einen und Zudosierung der anderen Lösung(en) erfolgen.

Die Normalitäten der oben erwähnten sauren und basischen Lösungen werden beispielsweise vor dem Vermischen so eingestellt, dass der pH-Wert des entstehenden Reaktionsgemisches zwischen -1 und 6, bevorzugt aber unter 3, liegt.

Zur Gewinnung der verbindungen der Formel I kann der vorläufer auch durch vermischen der wässrigen Lösung eines Erdalkalimetall- oder Zinksalzes oder eines Gemisches davon mit der Lösung eines Molybdat- oder Wolframatsalzes oder eines Gemisches davon zur Bildung einer verbindung der Formel ADO₄ hergestellt werden, wobei diese Verbindung dann nach Alterung, gegebenenfalls bei erhöhter Temperatur, gleichzeitig oder sequentiell mit der wässrigen Lösung eines Wismuth-III-Salzes und der wässrigen Lösung eines Vanadatsalzes zur Bildung einer erfindungsgemässen verbindung vermischt wird. Der pH-Wert der verschiedenen Ausgangslösungen ist vorzugsweise so einzustellen, dass er während der Zugabe dieser Lösungen im sauren Bereich, bevorzugt aber nicht über 3, liegt.

Nach einer Variante der Ausfällungsstufe können die Lösung eines Wismuth-III-Salzes und erforderlichenfalls eines weiteren Metallsalzes, z.B. eines Erdalkalimetall- oder Zinksalzes oder eines Gemisches davon, und die wässrige Lösung eines Vanadatsalzes und erforderlichenfalls eines Molybdat-, Wolframat- oder Sulfatsalzes oder eines Gemisches davon, gleichzeitig zu Wasser gegeben werden.

Nach der Ausfällungsstufe werden die so hergestellten Vorläufer einem Kristallisations- und Alterungsprozess (= Nachbehandlungsstufe) in wässriger Phase unterworfen.

Dabei wird die nach der Ausfällungsstufe erhaltene Suspension durch Zugabe einer anorganischen Base auf einem sauren pH-Bereich, z.B. auf einem pH-Wert zwischen 4 und 8,5, vorzugsweise zwischen 5 und 7, eingestellt und weiter gerührt. Dabei erweist sich ein gegebenenfalls stufenweises Erwärmen der Suspension, beispielsweise auf 50 bis 110°C, zweckmässig auf 90-95°C, während oder nach der pH-Erhöhung als vorteilhaft. Die Erhöhung des pH-Wertes kann auch stufenweise erfolgen, indem beispielsweise die Suspension zuerst während einiger Zeit, beispielsweise 60 Minuten, bei beispielsweise pH 3,5 gerührt und der pH-Wert erst dann weiter angehoben wird. Das Aufheizen kann z.B. durch elektrische Aussenheizung des Reaktionskessels oder aber auch durch direkte Zufuhr von Wasserdampf in den Reaktionskessel erfolgen.

Geeignete anorganische Basen sind beispielsweise NaOH oder KOH, bevorzugt in Form einer wässrigen Lösung.

Während der Nachbehandlung wandelt sich der gelartige amorphe Vorläufer in eine kristalline, brilliant-gelbe Verbindung um, deren Kristallinität gemäss Pulverröntgendiagramm als gut zu bezeichnen ist. Die Gesamtzeit für die Nachbehandlungsstufe kann je nach Ansatzgrösse variieren. Im allgemeinen sind 2 bis 5 Stunden ausreichend, um eine vollständige Kristallisation zu erzielen.

Es ist grundsätzlich möglich, die Fluoridionen beispielsweise als separate wässrige Lösung einzusetzen oder aber mit der Wismuth-III-Lösung oder mit der Vanadat-Lösung zu vermischen und dann beide Lösungen zu vereinigen. Bevorzugt aber sind die Fluoridionen in der Vanadatlösung vorhanden. Eine weitere Möglichkeit besteht darin, dass sowohl die Wismuth-III-Lösung als auch die Vanadat-Lösung Fluoridionen enthalten.

Gemäss dem erfindungsgemässen Verfahren ist auch möglich, die Fluoridionen erst bei der Nachbehandlungsstufe beizumischen. Es ist aber auch möglich, die Zugabe der Fluoridionen über beide Verfahrensstufen aufzuteilen.

Erfindungsgemäss bevorzugt werden die Fluoridionen bei der Nachbehandlung zugefügt.

Die Menge der Fluoridionen kann variieren; zweckmässig werden zwischen 0,1 und 3 Mol eines Fluoridsalzes, bezogen auf 1 Mol Wismuth, verwendet, bevorzugt aber zwischen 0,8 und 1,2, und ganz besonders bevorzugt 1 Mol Fluoridsalz.
Geeignete Fluoridsalze sind z.B. Alkalimetall-, Erdalkalimetall- und Ammoniumfluoride, z.B. NaF, KF, NH₄F, insbesondere aber NaF und KF, zweckmässig als wässrige Lösung.

Die Aufarbeitung der erfindungsgemäss erhaltenen Verbindungen erfolgt auf übliche Art, beispielsweise durch Abfiltrieren, Auswaschen des Filterkuchens mit Wasser zur Entfernung löslicher Salze, Trocknen und Pulverisieren.

Zur Verbesserung der Pigmenteigenschaften, wie beispielsweise der Stabilität gegen Wärme, Licht und chemische Angriffe, ist es vorteilhaft, die erfindungsgemäss erhaltenen Verbindungen während ihrer Herstellung (Fällung/Nachbehandlung) oder bevorzugt anschliessend an die oben beschriebenen Verfahrensstufen durch Behandlung nach bekannten, beispielsweise in den US-Patentschriften 3,370,971, 3,639,133 und 4,046,588 beschriebenen Verfahren, mit einer anorganischen oder organischen Schutzhülle zu überziehen. Zu diesem Zweck werden auf den Wismuthvanadatpigmenten z.B. anorganische Substanzen, beispielsweise Aluminium-, Titan-, Antimon-, Cerium-, Zirkonium- oder Siliziumverbindungen, oder Zinkphosphat oder Gemische davon, ausgefällt. Dabei kann diese Behandlung ein- oder mehrstufig erfolgen. Die Menge des Umhüllungsmittels beträgt zweckmässig 2-40, vorzugsweise 2-20 und insbesondere 3-10%, bezogen auf das Gesamtgewicht der Verbindung.

Zur Verbesserung bestimmter Pigmenteigenschaften können die erfindungsgemäss erhaltenen Produkte zusätzlich noch mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven Mitteln.

Die erfindungsgemäss erhaltenen Produkte können, falls erwünscht, nach üblichen Methoden, z.B. wie im US-Patent 4,762,523 beschrieben, in staubfreie Pigmentpräparate überführt werden.

Einen weiteren Erfindungsgegenstand bilden neue sehr farbstarke Wismuthvanadatpigmente pigmente der obigen Formel I, wobei in der Formel I A ein Erdalkalimetall, Zn oder ein Gemisch davon, und D Mo, W oder ein Gemisch davon bedeuten, und das Molverhältnis A zu Bi zwischen 0,01 und 0,6 und das Molverhältnis D zu V zwischen 0 und 0,4 liegen, die gemäss dem oben beschriebenen erfindungsgemässen Verfahren erhältlich sind, dadurch gekennzeichnet, dass diese Verbindungen eine Farbstärke von 0,045 bis 0,130 bei Standardfarbtiefe 1/25 gemäss DIN 53235 aufweisen.

Für die Ausdeutung des Substituenten A und der Molverhältnisse A zu Bi und D zu V gilt die gleiche Definition, welche bereits oben angegeben ist.

Bevorzugtes Molverhältnis A zu Bi ist 0,02 bis 0,5 und D zu V ist 0,01 bis 0,3.

Bevorzugt sind Wismuthvanadatpigmente der Formel I, worin A Ca und D Mo bedeuten und die Molverhältnisse Ca zu Bi zwischen 0,03 und 0,4 und Mo zu V zwischen 0,01 und 0,3 liegen.

Der Farbton von nach dem erfindungsgemässen Verfahren erhaltenen farbstarken Wismuthvanadatpigmenten der Formel I kann z.B. einerseits durch Variation des Molverhältnisses Ca zu Bi und/oder Mo zu V, andererseits auch durch Variation des pH-Wertes vor oder während des Erwärmens bei der Nachbehandlungsstufe beeinflusst werden, so dass Pigmente mit grünstichig gelben und rotstichig gelben Farbtönen in der Applikation erhalten werden können.

Die Wismuthvanadatpigmente der Formel I weisen in den meisten Fällen eine tetragonale scheelitartige Kristallstruktur auf.

Die Charakterisierung der tetragonalen Kristallstruktur erfolgt durch Aufnahme des Pulverröntgendiagrammes. Wenn auch natürlich das gesamte Diagramm zur Beurteilung betrachtet werden muss, erweist sich doch der Bereich bei einem Beugungsebenenabstand von ca. 2,6 Å als besonders illustrativ. BiVO₄ in der stabilen beta-Fergusonit Strukur, welche monokline Symmetrie aufweist, ergibt zwei ungefähr gleich intensive Linien bei d-Werten von 2,546 Å und 2,598 Å. Die tetragonale, scheelitartige Struktur zeigt in diesem Bereich nur eine Linie mit einem d-Wert von ca. 2,58 Å.

Die Farbstärke wird durch dasjenige Verhältnis eines in einem Lack applizierten Buntpigments zu Weisspigment (TiO₂) ausgedrückt, welches zur Standardfarbtiefe 1/25 gemäss DIN 53235 führt. Dieses Verhältnis gibt also diejenige Menge Buntpigment (im vorliegenden Fall eine erfindungsgemässe Verbindung der Formel I) an, welche in Abmischung mit einer gegebenen Menge Weisspigment die Herstellung einer Lackausfärbung bei Standardfarbtiefe 1/25 erlaubt.

Die obigen farbstarken Wismuthvanadatpigmente können nach dem bereits oben erwähnten Verfahren hergestellt werden.

Die erfindungsgemäss erhaltenen Wismuthvanadatpigmente besitzen gute Pigmenteigenschaften und eignen sich ausgezeichnet zum Pigmentieren von hochmolekularen organischen Materialien.

Das erfindungsgemäss zu färbende hochmolekulare organische Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder Ester, wie Celluloseacetat, Cellulosepropionat, Celluloseacetobutyrat oder Nitrocellulose, handeln, insbesondere aber um vollsynthetische organische Polymere (Duro- und Thermoplaste), wie sie durch Polymerisation, Polykondensation oder Polyaddition erhalten werden. Aus der Klasse der Polymeren seien in erster Linie genannt: Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS oder EVA. Aus der Reihe der Polyadditions- und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, ferner die als Lackharze verwendeten Polyester, und zwar sowohl gesättigte, wie z.B. Alkydharze, als auch ungesättigte, wie beispielsweise Maleinatharze, ferner die linearen Polyester, Polyamide, Polycarbonate und Polyphenylenoxide oder Silikone, genannt. Die erwähnten hochmolekularen Verbindungen können einzeln oder in Gemischen, als plastische Massen oder Schmelzen, die gegebenenfalls zu Fasern versponnen werden können, vorliegen. Sie können auch in gelöster Form als Filmbildner oder Bindemittel für Lacke, Anstrichstoffe oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den erfindungsgemäss erhaltenen Verbindungen erfolgt beispielsweise derart, dass man eine solche Verbindung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemäss erhaltenen Verbindungen in die Polymeren eingearbeitet werden. Es ist ferner möglich, zwecks Erzielung verschiedener Farbtöne den hochmolekularen, organischen Stoffen neben den erfindungsgemäss erhaltenen Verbindungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die Wismuthvanadatpigmente gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erfindungsgemäss herstellbaren Wismuthvanadatpigmente können im in Frage kommenden hochmolekularen organischen Material beispielsweise in einer Menge von 0,001 bis 70 Gew.-%, bezogen auf das Material, insbesondere aber von 0,01 bis 35 Gew.-%, vorliegen.

Bevorzugte Einsatzgebiete sind im Industrie- und Fahrzeuglackbereich zur Herstellung bleifreier wetterechter brillanter Unifarbtöne, sowie in Abmischungen mit anderen Pigmenten zur Einstellung bestimmter Farbtöne.

In Kunststoffe, Fasern, Lacke, Anstrichstoffe oder Drucke eingearbeitet, zeichnen sich die erfindungsgemäss erhaltenen Verbindungen durch gute allgemeine Pigmenteigenschaften, wie gute Dispergierbarkeit, hohe Farbstärke, Reinheit, hohe Deckkraft, gute Ueberlackier-, Migrations-, Hitze-, Licht- und Wetterbeständigkeit, sowie gute Beständigkeit gegen Chemikalien, wie Säuren, Basen, organische Lösungsmittel und Industrieatmosphäre, und insbesondere durch eine sehr hohe Farbstärke und ein hohes Deckvermögen, aus. Ausserdem verleihen sie den daraus hergestellten Druckfarben, Anstrichstoffen und Lacken ein gutes rheologisches Verhalten und den getrockneten Filmen einen guten Glanz.

In den nachfolgenden Beispielen bedeuten die Prozente Gewichtsprozente. Die Zusammensetzung der Verbindungen wird dabei durch Elementaranalysen und daraus errechnete Molverhältnisse A zu Bi und D zu V angegeben. Der Gehalt an Wismuth-III-Oxid wird aus den übrigen, direkt bestimmten Gehalten berechnet.

### Beispiel 1 (Bi, Ca)(V, MO)O₄:

97,0 g Bi(NO₃)₃·5H₂O, 11,8 g Ca(NO₃)₂·4H₂O und 72,0 g 54%-iger HNO₃ werden in 600 ml H₂O gelöst. Unter Rühren wird eine Lösung von 28,0 g NaVO₃·H₂O, 12,1 g Na₂MoO₄·2H₂O, 4,7 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und Raumtemperatur gerührt. Danach wird der pH über einen Zeitraum von einer Stunde durch langsame Zugabe von 1N Natronlauge auf 6,5 erhöht. Anschliessend wird die Suspension zum Rückfluss erhitzt, wobei der pH-Wert dieser Suspension durch weitere Zugabe von 1N Natronlauge bei 6,5 gehalten wird (z.B. mit Hilfe eines pH-Staten). Der pH wird so lange bei 6,5 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt, anschliessend wird sie abfiltriert, und der Rückstand wird salzfrei gewaschen und bei 90°C im Trockenschrank getrocknet. Man erhält 71 g eines leuchtendgelben Pigmentpulvers mit folgender Elementaranalyse:
Ca: 4,9%; V: 11,7% und Mo: 1,5%.
Dies ergibt die folgenden Molverhältnisse:
Ca zu Bi = 0,40; Mo zu V: 0,07.
Das Röntgendiagramm zeigt eine tetragonale Struktur.

### Beispiel 2 (Bi, Ca)(V, Mo)O₄:

Es wird wie in Beispiel 1 verfahren, doch werden die folgenden Substanzmengen eingesetzt:
97,0 g Bi(NO₃)₃·5H₂O, 2,95 g Ca(NO₃)₂·4H₂O und 72,0 g 54%-iger HNO₃ in 600 ml H₂O;
28,0 g NaVO₃·H₂O, 3,0 g Na₂MoO₄·2H₂O, 7,1 g NaF und 20,0 g NaOH in 600 ml H₂O.
Der pH-Wert vor Erwärmen wird auf pH 5,9 gestellt und beim Erwärmen konstant gehalten.
Man erhält 69 g eines Pigmentpulvers mit folgender Elementaranalyse:
Ca: 3,4%; V: 11,8% und Mo 0,5%.
Dies ergibt die folgenden Molverhältnisse:
Ca zu Bi = 0,31; Mo zu V: 0,02.

### Beispiel 3 (Bi, Ca) (V, Mo)O₄: Variation der Molverhältnisse Ca zu Bi und Mo zu V.

97,0 g Bi(NO₃)₃·5H₂O, 7,2 g Ca(NO₃)₂·4H₂O und 72,0 g 54%-iger HNO₃ werden in 600 ml H₂O gelöst. Unter Rühren wird eine Lösung von 28,0 g NaVO₃.H₂O, 7,6 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt; die erhaltene Suspension wird anschliessend abfiltriert, und der Rückstand wird salzfrei gewaschen und bei 90°C im Trockenschrank getrocknet. Man erhält 71 g eines leuchtendgelben Pigmentpulvers mit folgender Elementaranalyse:
Ca: 4,1%; V: 17,3% und Mo: 3,5%.
Dies ergibt die folgenden Molverhältnisse:
Ca zu Bi = 0,36; Mo zu V: 0,11.

### Beispiel 4 (Bi, Mg) (V, Mo)O₄; Verwendung von Mg(NO₃)₂ anstatt Ca(NO₃)₂.

97,0 g Bi(NO₃)₃.5H₂O, 3,1 g Mg(NO₃)₂.6H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH-Wert über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, und die Suspension wird anschliessend abfiltriert. Der Rückstand wird salzfrei gewaschen und bei 90°C im Trockenschrank getrocknet. Man erhält 69 g eines leuchtendgelben Pigmentpulvers mit folgender Elementaranalyse:
Mg: 0,3%; V: 16,8% und Mo: 1,6%.
Dies ergibt die folgenden Molverhältnisse:
Mg zu Bi = 0,04; Mo zu V: 0,05.

### Beispiel 5 (Bi, Sr) (V, Mo)O₄; Verwendung von Sr(NO₃)₂ anstatt Ca(NO₃)₂.

97,0 g Bi(NO₃)₃.5H₂O, 2,6 g Sr(NO₃)₂ und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 69 g eines leuchtendgelben Pigmentpulvers mit folgender Elementaranalyse:
Sr: 2,2%; V: 18,8% und Mo: 1,2%.
Dies ergibt die folgenden Molverhältnisse:
Sr zu Bi = 0,09; Mo zu V: 0,03.

### Beispiel 6 (Bi, Zn) (V, Mo)O₄; Verwendung von Zn(NO₃)₂ anstatt Ca(NO₃)₂.

97,0 g Bi(NO₃)₃.5H₂O, 3,6 g Zn(NO₃)₂.6H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 69 g eines leuchtendgelben Pigmentpulvers mit folgender Elementaranalyse:
Zn: 1,2%; V: 18,3% und Mo: 1,6%.
Dies ergibt die folgenden Molverhältnisse:
Zn zu Bi = 0,06; Mo zu V: 0,05.

### Beispiel 7 (Bi, Sr) (V, Mo)O₄; Verwendung von Sr(NO₃)₂ anstatt Ca(NO₃)₂.

97,0 g Bi(NO₃)₃.5H₂O, 5,1 g Sr(NO₃)₂ und 72,0 g 54%-iger HNO₃ werden in 600 ml H₂O gelöst. Unter Rühren wird eine Lösung von 28,0 g NaVO₃.H₂O, 12,1 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH-Wert über einen Zeitraum von einer Stunde durch langsame Zugabe von 1N Natronlauge auf 6,5 erhöht. Anschliessend wird die Suspension zum Rückfluss erhitzt, wobei der pH-Wert dieser Suspension durch weitere Zugabe von 1N Natronlauge bei 6,5 gehalten wird (z.B. mit Hilfe eines pH-Staten). Der pH-Wert wird so lange bei 6,5 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 71 g eines leuchtendgelben Pigmentpulvers mit folgender Elementaranalyse:
Sr: 1,9%; V: 18,0% und Mo: 5,5%.
Dies ergibt die folgenden Molverhältnisse:
Sr zu Bi = 0,08; Mo zu V: 0,16.

### Beispiel 8 (Bi, Ca, Sr) (V, Mo)O₄; Verwendung eines Ca(NO₃)₂ und Sr(NO₃)₂.

97,0 g Bi(NO₃)₃.5H₂O, 5,9 g Ca(NO₃)₂.4H₂O, 5,3 g Sr(NO₃)₂ und 72,0 g 54%-iger HNO₃ werden in 600 ml H₂O gelöst. Unter Rühren wird eine Lösung von 28,0 g NaVO₃.H₂O, 12,1 g Na₂MoO₄.2H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH-Wert über einen Zeitraum von einer Stunde durch langsame Zugabe von 1N Natronlauge auf 6,5 erhöht. Anschliessend wird die Suspension zum Rückfluss erhitzt, wobei der pH-Wert dieser Suspension durch weitere Zugabe von 1N Natronlauge bei 6,5 gehalten wird (z.B. mit Hilfe eines pH-Staten). Der pH wird so lange bei 6,5 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 71 g eines leuchtendgelben Pigmentpulvers mit folgender Elementaranalyse:
Sr: 2,3%; Ca: 2,6%; V: 17,2% und Mo: 5,0%.
Dies ergibt die folgenden Molverhältnisse:
Sr zu Bi = 0,09; Ca zu Bi = 0,23; Mo zu V: 0,15.

### Beispiel 9 (Reines Wismuthvanadat).

97,0 g Bi(NO₃)₃.5H₂O und 72,0 g 54%-iger HNO₃ werden in 600 ml H₂O gelöst. Unter Rühren wird eine Lösung von 28,0 g NaVO₃.H₂O, 7,1 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH-Wert über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält ein etwas rötliches Pigmentpulver mit einer niederigeren Farbstärke als ein entsprechendes Wismuthvanadatpigment gemäss obiger Formel I.

### Beispiel 10 (Bi, Ca) (V, Mo)O₄; Variation der Fluoridmenge.

97,0 g Bi(NO₃)₃.5H₂O, 2,9 g Ca(NO₃)₂.4H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O, 22,7 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 69 g eines leuchtendgelben Pigmentpulvers mit folgender Elementaranalyse:
Ca: 2,0%; V: 18,6% und Mo: 1,3%.
Dies ergibt die folgenden Molverhältnisse:
Ca zu Bi = 0,17; Mo zu V: 0,04.

### Beispiel 11 (Bi, Ca) (V, Mo)O₄; Variation der Fluoridmenge.

97,0 g Bi(NO₃)₃.5H₂O, 2,9 g Ca(NO₃)₂.4H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O, 0,8 g NaF und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird anschliessend salzfrei gewaschen und bei 90°C im Trockenschrank getrocknet. Man erhält 69 g eines leuchtendgelben Pigmentpulvers mit folgender Elementaranalyse:
Ca: 2,0%; V: 18,6% und Mo: 1,3%.
Dies ergibt die folgenden Molverhältnisse:
Ca zu Bi = 0,17; Mo zu V: 0,04.

### Beispiel 12 (Bi, Ca) (V, Mo)O₄; Fluoridionenzugabe nach der Fällung.

97,0 g Bi(NO₃)₃.5H₂O, 2,9 g Ca(NO₃)₂.4H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O und 20,0 g NaOH in 600 ml H₂O zugegeben. Der pH-Wert der so erhaltenen Suspension liegt bei ca. 0,9. Anschliessend wird eine Lösung von 7,1 g NaF in 100 ml H₂O zugegeben und der pH-Wert wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt, wobei der pH-Wert dieser Suspension durch weitere Zugabe von 1N Natronlauge bei 6,0 gehalten wird (z.B. mit Hilfe eines pH-Staten). Der pH-Wert wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 69 g eines leuchtendgelben Pigmentpulvers mit folgender Elementaranalyse:
Ca: 2,0%; V: 18,6% und Mo: 1,3%.
Dies ergibt die folgenden Molverhältnisse:
Ca zu Bi = 0,17; Mo zu V: 0,04.

### Beispiel 13 (Bi, Ca) (V, Mo)O₄; Fluoridionenzugabe bei pH = 6.0.

97,0 g Bi(NO₃)₃.5H₂O, 2,9 g Ca(NO₃)₂.4H₂O und 72,0 g 54%-iger HNO₃ werden in 600 ml H₂O gelöst. Unter Rühren wird eine Lösung von 28,0 g NaVO₃.H₂O, 3,0 g Na₂MoO₄.2H₂O und 20,0 g NaOH in 600 ml H₂O zugegeben. Der pH-Wert der so erhaltenen Suspension liegt bei ca. 0,9 und wird mit 30%-iger Natronlauge auf 3,5 gestellt. Anschliessend wird die Suspension während einer Stunde bei diesem pH-Wert und bei Raumtemperatur gerührt. Danach wird der pH über einen Zeitraum von einer Stunde durch langsame Zugabe von 1N Natronlauge auf 6,0 erhöht. Anschliessend wird die Suspension zum Rückfluss erhitzt und eine Lösung von 7,1 g NaF in 100 ml H₂O werden der Pigmentsuspension zugegeben, wobei der pH-Wert dieser Suspension durch weitere Zugabe von 1N Natronlauge bei 6,0 gehalten wird (z.B. mit Hilfe eines pH-Staten). Der pH wird so lange bei 6,0 konstant gehalten, bis sich die Suspension gelb zu verfärben beginnt, und ein spontaner pH Anstieg auftritt. Die Pigmentsuspension wird dann noch 1 Stunde am Rückfluss gerührt, wobei der pH-Wert auf ca. 8,5 ansteigt. Um nicht vollständig eingebautes Vanadat in Lösung zu bringen, wird der pH-Wert auf 9,8 eingestellt, die Suspension wird anschliessend abfiltriert, und der Rückstand wird salzfrei gewaschen und bei 90°C im Trockenschrank getrocknet. Man erhält 69 g eines leuchtendgelben Pigmentpulvers mit folgender Elementaranalyse:
Ca: 2,0%; V: 18,6% und Mo: 1,3%.
Dies ergibt die folgenden Molverhältnisse:
Ca zu Bi = 0,17; Mo zu V: 0,04.

### Beispiel 14 (Anwendungsbeispiel in HDPE):

3 g des erfindungsgemässen Pigmentes gemäss Beispiel 1 und 1000 g ®Vestolen 6016 (Lieferant: HUELS) werden in eine 31 Glasflasche eingewogen und während 2 Stunden trocken vermischt. Anschliessend wird das Gemisch zweimal bei 200°C extrudiert und dann granuliert. Schliesslich werden auf einer Spritzgussmaschine 1,5 mm dicke Plättchen hergestellt, wobei zur Prüfung der Hitzebeständigkeit die Spritzgussmasse jeweils 5 Minuten einer Temperatur zwischen 220°C und 300°C ausgesetzt wird. Das Pigment zeichnet sich durch eine ausgezeichnete Hitzebeständigkeit aus.

### Beispiel 15 (Anwendungsbeispiel in PVC):

0,5 g des gemäss Beispiel 1 erhaltenen Pigments werden mit 76 g Polyvinylchlorid, 33 g Dioctylphthalat, 2 g Dibutylzinndilaurat und 2 g Titandioxid zusammengemischt, und das erhaltene Gemisch wird auf dem Walzenstuhl während 15 Minuten bei 160°C zu einer dünnen Folie verarbeitet. Die so erzeugte grünstichig gelbe Ausfärbung ist farbstark, gut deckend, migrations- und lichtbeständig.

### Beispiel 16 (Anwendung in einem Alkyd-Melamin-Einbrennlack):

60 g einer 60%igen Lösung eines nicht-trocknenden Alkydharzes in Xylol (Handelsname ®Beckosol 27-320 der Firma Reichhold-Albert-Chemie), 36 g einer 50%igen Lösung eines Melamin-Formaldehyd-Harzes in einem Butanol-Xylol-Gemisch (Handelsname ®Super-Beckamin 13-501 der Firma Reichhold-Albert-Chemie), 2 g Xylol und 2 g Methylcellosolve werden vermischt, und 100 g dieses Gemisches werden mit Hilfe eines Rührers zu einer homogenen Lacklösung verrührt.

30 g des so erhaltenen Klarlackes, 10 g des gemäss Beispiel 1 erhaltenen Pigmentes, 9 ml Methylisobutylketon und 135 g Glasperlen (4,5 mm Durchmesser) werden während 16 Stunden auf einer Vibratom-Schwingmühle (der Firma Siebtechnik, Mülheim/Ruhr, Deutschland) dispergiert. Der so erhaltene Lack wird mit einem Erichsen-Filmziehgerät (Typ 238/1) auf einem mit einem vinyllack beschichteten Aluminiumstreifen ausgezogen, der erhaltene Lackfilm wird dann während einer Stunde abgelüftet und während 30 Minuten bei 130°C eingebrannt. Man erhält eine brilliante, grünstichig-gelbe und lichtbeständige Lackierung.

### Arbeitsweise zur Herstellung des Weissverschnittlackes zur Ermittlung der Farbstärke.

Zur Ermittlung der Farbstärke wird auf die folgende Weise eine Lackausfärbung hergestellt.
Zur Einstellung der Standardfarbtiefe 1/25 gemäss DIN 53235 wird eine Menge von x g Buntpigment (erfindungsgemässes Wismuthvanadatpigment) bezogen auf 10,0 g Titandioxid zugegeben, so dass die Summe x+y 33,0 g ergibt.

In einem 180 ml Glasbehälter mit Deckel werden hintereinander zugegeben:
- 100: g Glasperlen,) 3 mm,
- 28,0: g Dispergiermedium,
- x: g Buntpigment und
- y: g Titandioxid (Typ RCR-2, Firma Tioxid).

Das Dispergiermedium besteht aus:
- 34,4: % Alkydlack (Nebores® SP-24-70, Sojaphthalat eines Alkydharzes, 70 Gew.-%, in Shellsol® H (white spirit) gelöst, Firma Necarbo),
- 47: % Lösungsmittel (Shellsol® H),
- 0,3: % Dispergierungsmittel [Borchigen® 911 (Soja Lecithin) der Firma Borchers],
- 0,8: % Antifellmittel (Exkin® 2,10% in Shellsol® H),
- 1,1: % Netzmittel (1%-iges Baysilon® MA in Shellsol® H, Fa. Byk-Malinckrodt),
- 16,4: % Sikkative (Octanoatsalzgemisch, 6,0% Zr, 1,2% Co, 3,0% Ca).

Zur Dispergierung wird der Glasbehälter mit Inhalt während 15 Min. mit dem Dispergiergerät "Skandex" geschüttelt. Anschliessend werden 70 g Nebores® SP-24-70 zugegeben und erneut 10 Min. mit dem Dispergiergerät "Skandex" dispergiert. Auf einer Anstrichkarte (Karton der Firma Leneta, USA, Form WDX) wird mit dem Filmziehgerät Bird Applikator BA-30 ein Lackfilm aufgebracht, der anschliessend während 12 Stunden an der Luft getrocknet wird (Nassfilmdicke: 80 Micron; Trockenfilmdicke: 35 Micron). Danach werden die Farbmessungen durchgeführt.

Farbmessung: Die Farbmessungen werden an den beschriebenen Lackfilmen durchgeführt. Zur Bestimmung der Farbstärke wird an den Lackfilmen nur über weissem Untergrund gemessen.
Ueber die Bestimmung der Farbstärke auf der Basis von DIN 53235 wurde bereits oben berichtet.

### Technische Daten des Messapparates:

- Spektrophotometer:: Datacolor 3890;
- Geometrie:: d/8°;
- Messöffnung:: 27 mm;
- Wellenlänge:: 400-700 nm, jede 20 nm.

Eichung: Der Weisstandard wird aus BaSO₄ für Farbmessung(Merck) hergestellt. Zu diesem Zweck wird eine Tablette gepresst, und die gemessenen Werte werden als Absolutwerte eingegeben. Der Schwarzstandard (Zeiss) ist ein einseitig geschlossenes und mit Samt ausgekleidetes Rohr (Reflektionswert 0%).

### Arbeitsweise für die Herstellung eines Volltonlackes

Lackausfärbungen werden auf folgende Weise hergestellt:

In einem 180 ml Glasbehälter mit Deckel werden hintereinander zugegeben: 70 ml Glasperlen (3 mm Durchmesser), 30,0 g Dispergiermedium und 21,0 g Buntpigment.

Das Dispergiermedium besteht aus:
- 28,6: % ®Setal 84 XX 70 (Firma Synthese, NL) und
- 71,4: % Xylol.

Zur Dispergierung wird der Glasbehälter mit Inhalt während 15 Minuten mit dem Dispergiergerät "Skandex" [Internatio-Alchemy] geschüttelt. Anschliessend werden 62,0 g Bindemittel zugegeben und erneut 5 Minuten mit dem Dispergiergerät "Skandex" geschüttelt. Das Bindemittel besteht aus:
- 53,4: % ®Setal 84 XX 70 (Firma Synthese, NL),
- 25,6: % ®Setamine US 132 BB 70 (Firma Synthese, NL),
- 3,1: % Netzmittel (1,0% ®Baysilon Oel MA der Firma Bayer und 98,0% Depanol® J),
- 6,1: % n-Butanol (reinst),
- 8,6: % Lösungsmittel (®Solvesso 100, Firma Esso) und
- 3,1: % Isophoron (3,5,5-Trimethyl-2-cyclohexen-1-on).

### Herstellung der Lackausfärbungen

Der Volltonlack und der Weissverschnittlack werden auf Blech gespritzt.

Einzelheiten:
- Spritzdruck:: 2,5 bar;
- Filmdicke (trocken):: 80 mikron;
- Ausdünsten:: 30 Min. (Zimmertemp.);
- Einbrennzeit:: 30 Min. bei 130°C.

Die Bleche werden erneut gespritzt, so dass schliesslich ein opaker Lackfilm von 160 mikron (Trockenfilmdicke) appliziert wird.

### Farbmessung

Mit den Volltonlacken können z.B. die Normfarbwerte X, Y und Z gemessen werden. Die Messung der 16 Reflektionswerte und die Berechnung der Normfarbwerte X, Y und Z erfolgen gemäss DIN 5033 für Normlichtart D 65 und 10° Normbeobachter, mit Glanzeinschluss. Bei Berechnung der Werte werden 4% Oberflächenreemission abgezogen.

Technische Daten des Messgeräts sowie Eichung: gleich wie oben bei der Ermittlung der Farbstärke angegeben.

## Patentansprüche

1. Verbessertes Verfahren zur Herstellung von Wismuthvanadatpigmenten und auf Wismuthvanadat basierenden festen Lösungen durch a) Vermischen einer Lösung eines Wismuth-III-Salzes, enthaltend erforderlichenfalls ein oder mehrere weitere Metallsalze oder ein Gemisch davon, mit der wässrigen Lösung eines Vanadatsalzes, enthaltend erforderlichenfalls ein Molybdat-, Wolframat- oder Sulfatsalz oder ein Gemisch davon, und b) anschliessende Nachbehandlung der so erhaltenen Suspension zur Umwandlung der zuerst amorph ausgefallenen Partikel in kristalline Verbindungen, dadurch gekennzeichnet, dass während des Vermischens und/oder bei der anschliessenden Nachbehandlungsstufe Fluoridionen verwendet werden.

2. Verfahren gemäss Anspruch 1, wonach Wismuthvanadatverbindungen der Formel I
(Bi,A)(V,D)O₄ (I)
hergestellt werden, worin A ein Erdalkalimetall, Zn oder ein Gemisch davon, und D Mo, W oder ein Gemisch davon bedeuten, und das Molverhältnis A zu Bi zwischen 0,01 und 0,6 und das Molverhältnis D zu V zwischen 0 und 0,4 liegen, wobei man eine Lösung eines Wismuth-III-salzes, enthaltend ein Erdalkalimetall- oder Zn-Salz oder ein Gemisch davon, mit der wässrigen Lösung eines Vanadatsalzes enthaltend erforderlichenfalls ein Molybdat- oder Wolframatsalz oder ein Gemisch davon in den oben angegebenen Molverhältnissen vermischt.

3. Verfahren gemäss Anspruch 2, worin in der Formel I die Molverhältnisse A zu Bi zwischen 0,02 und 0,5 und D zu V zwischen 0,01 und 0,3 liegen.

4. Verfahren gemäss Anspruch 2, worin in der Formel I A Ca oder Sr und D Mo oder W bedeuten und die Molverhältnisse A zu Bi zwischen 0,03 und 0,4 und D zu V zwischen 0,01 und 0,3 liegen.

5. Verfahren gemäss Anspruch 2, worin in der Formel I A Ca und D Mo bedeuten und die Molverhältnisse Ca zu Bi zwischen 0,03 und 0,4 und Mo zu V zwischen 0,01 und 0,3 liegen.

6. Verfahren gemäss Anspruch 1, wonach die Fluoridionen in der Vanadatlösung vorhanden sind.

7. Verfahren gemäss Anspruch 1, wonach die Fluoridionen erst bei der Nachbehandlung beigemischt werden.

8. Verfahren gemäss Anspruch 1, wonach zwischen 0,1 und 3 Mol eines Fluoridsalzes, bezogen auf 1 Mol Wismuth, verwendet werden.

9. Verfahren gemäss Anspruch 7, wonach 1 Mol eines Fluoridsalzes, bezogen auf 1 Mol Wismuth, verwendet wird.

10. Wismuthvanadatpigmente der Formel I
(Bi,A)(V,D)O₄ (I),
worin A ein Erdalkalimetall, Zn oder ein Gemisch davon und D Mo, W oder ein Gemisch davon bedeuten und das Molverhältnis A zu Bi zwischen 0,01 und 0,6 und das Molverhältnis D zu V zwischen 0 und 0,4 liegen, erhältlich gemäss dem Verfahren entsprechend Anspruch 1, dadurch gekennzeichnet, dass diese Verbindungen eine Farbstärke von 0,045 bis 0,130 bei Standardfarbtiefe 1/25 gemäss DIN 53235 aufweisen.

11. Wismuthvanadatpigmente gemäss Anspruch 10 der Formel I, worin das Molverhältnis A zu Bi zwischen 0,02 und 0,5 und D zu V zwischen 0,01 und 0,3 liegen.

12. Wismuthvanadatpigmente gemäss Anspruch 10 der Formel I, worin A Ca und D Mo bedeuten, und die Molverhältnisse Ca zu Bi zwischen 0,03 und 0,4 und Mo zu V zwischen 0,01 und 0,3 liegen.

13. Verfahren gemäss Anspruch 1, dadurch gekennzeichnet, dass man die erhaltenen Verbindungen mit einer anorganischen oder organischen Schutzhülle überzieht.

14. Verwendung der nach Anspruch 1 erhaltenen Wismuthvanadatpigmente zum Einfärben von hochmolekularem organischem Material.

15. Hochmolekulares organisches Material enthaltend ein gemäss Anspruch 1 erhaltenes Pigment.

## Claims

1. An improved process for the preparation of bismuth vanadate pigments and solid solutions based on bismuth vanadate by a) mixing a solution of a bismuth(III) salt containing, if required, one or more further metal salts or a mixture thereof with the aqueous solution of a vanadate salt containing, if required, a molybdate, tungstate or sulfate salt or a mixture thereof and b) subjecting the suspension thus obtained to a subsequent aftertreatment to convert the particles first precipitated in amorphous form into crystalline compounds, wherein during the mixing and/or during the subsequent aftertreatment step fluoride ions are used.

2. A process according to claim 1, wherein bismuth vanadate compounds of the formula I
(Bi,A)(V,D)O₄ (I)
are prepared, in which A is an alkaline earth metal, Zn or a mixture thereof, and D is Mo, W or a mixture thereof, and the molar ratio of A to Bi is between 0.01 and 0.6 and the molar ratio of D to V is between 0 and 0.4, in which a solution of a bismuth(III) salt containing an alkaline earth metal salt or a zinc salt or a mixture thereof is mixed with the aqueous solution of a vanadate salt containing, if required, a molybdate or tungstate salt or a mixture thereof in the abovementioned molar ratios.

3. A process according to claim 2, wherein in formula I the molar ratio of A to Bi is between 0.02 and 0.5 and that of D to V is 0.01 to 0.3.

4. A process according to claim 2, wherein in formula I A is Ca or Sr and D is Mo or W, and the molar ratio of A to Bi is between 0.03 and 0.4 and that of D to V between 0.01 and 0.3.

5. A process according to claim 2, wherein in formula I A is Ca and D is Mo, and the molar ratio of Ca to Bi is between 0.03 and 0.4 and that of Mo to V between 0.01 and 0.3.

6. A process according to claim 1, wherein the fluoride ions are present in the vanadate solution.

7. A process according to claim 1, wherein the fluoride ions are only admixed at the aftertreatment stage.

8. A process according to claim 1, wherein between 0.1 and 3 mol of a fluoride salt, relative to 1 mol of bismuth, are used.

9. A process according to claim 7, wherein 1 mol of a fluoride salt, relative to 1 mol of bismuth, is used.

10. A bismuth vanadate pigment of the formula I
(Bi,A) (V,D)O₄ (I),
in which A is an alkaline earth metal, Zn or a mixture thereof and D is Mo, W or a mixture thereof and the molar ratio of A to Bi is between 0.01 and 0.6 and the molar ratio of D to V is between 0 and 0.4, obtainable in accordance with the process corresponding to claim 1, wherein these compounds have a colour strength of 0.045 to 0.130 at a standard depth of shade of 1/25 according to DIN 53235.

11. A bismuth vanadate pigment according to claim 10 of the formula I wherein the molar ratio of A to Bi is between 0.02 and 0.5 and that of D to V between 0.01 and 0.3.

12. A bismuth vanadate pigment according to claim 10 of the formula I wherein A is Ca and D is Mo and the molar ratio of Ca to Bi is between 0.03 and 0.4 and that of Mo to V between 0.01 and 0.3.

13. A process according to claim 1, wherein the compounds obtained are coated with an inorganic or organic protective covering.

14. Use of the bismuth vanadate pigment obtained according to claim 1 for the coloration of high-molecular-weight organic material.

15. A high-molecular-weight organic material containing a pigment obtained according to claim 1.

## Revendications

1. Procédé amélioré pour la préparation de pigments de vanadate de bismuth et de solutions solides à base de vanadate de bismuth par a) mélange d'une solution d'un sel de bismuth III, contenant en cas de besoin un ou plusieurs sels métalliques ou leurs mélanges, avec la solution aqueuse d'un sel de vanadate contenant en cas de besoin un sel de molybdate, un sel de tungstate ou un sel de sulfate ou leurs mélanges, et b) traitement ultérieur consécutif de la suspension ainsi obtenue pour la transformation en composés cristallins des particules précipitées d'abord sous forme amorphe, caractérisé en ce qu'on utilise des ions fluorure au cours du mélange et/ou au cours de l'étape de traitement ultérieur consécutif.

2. Procédé selon la revendication 1 selon lequel on prépare des composés de vanadate de bismuth de formule I
(Bi,A) (V,D)O₄ (I)
dans laquelle A signifie un métal alcalino-terreux, Zn ou leurs mélanges, et D Mo, W ou leurs mélanges et le rapport molaire entre A et Bi est compris entre 0,01 et 0,6 et le rapport molaire entre D et V est compris entre 0 et 0,4, en mélangeant une solution d'un sel de bismuth III contenant un sel d'un métal alcalino-terreux ou de Zn, ou leurs mélanges, avec la solution aqueuse d'un sel de vanadate contenant en cas de besoin un sel de molybdate ou un sel de tungstate ou leurs mélanges dans les rapports molaires donnés ci-dessus.

3. Procédé selon la revendication 2, selon lequel dans la formule I les rapports molaires entre A et Bi sont compris entre 0,02 et 0,5 et entre D et V entre 0,01 et 0,3.

4. Procédé selon la revendication 2, selon lequel dans la formule I A signifie Ca ou Sr et D Mo ou W et les rapports molaires entre A et Bi sont compris entre 0,03 et 0,4 et entre D et V entre 0,01 et 0,3.

5. Procédé selon la revendication 2, selon lequel dans la formule I A signifie Ca et D Mo et les rapports molaires entre Ca et Bi sont compris entre 0,03 et 0,4 et les rapports molaires entre Mo et V entre 0,01 et 0,3.

6. Procédé selon la revendication 1, selon lequel les ions fluorure sont présents dans la solution de vanadate.

7. Procédé selon la revendication 1, selon lequel on additionne les ions fluorure seulement après le traitement ultérieur.

8. Procédé selon la revendication 1, selon lequel on utilise une quantité de sel de fluorure comprise entre 0,1 et 3 moles calculée pour 1 mole de bismuth.

9. Procédé selon la revendication 7, selon lequel on utilise 1 mole de sel de fluorure par rapport à 1 mole de bismuth.

10. Pigments de vanadate de bismuth de formule I
(Bi,A) (V,D)O₄ (I)
dans laquelle A signifie un métal alcalino-terreux, Zn ou leurs mélanges, et D Mo, W ou leurs mélanges et le rapport molaire A et Bi est compris entre 0,01 et 0,6 et le rapport molaire entre D et V entre 0 et 0,4, que l'on peut obtenir selon le procédé conformément à la revendication 1, caractérisés en ce que ces composés présentent un pouvoir colorant de 0,045 à 0,130 pour une intensité de coloration normalisée de 1/25 selon la norme DIN 53235.

11. Pigments de vanadate de bismuth de formule I selon la revendication 10, dans lesquels le rapport molaire entre A et Bi est compris entre 0,02 et 0,5 et entre D et V entre 0,01 et 0,3.

12. Pigments de vanadate de bismuth de formule I selon la revendication 10, dans laquelle A signifie Ca et D Mo et les rapports molaires entre Ca et B sont compris entre 0,03 et 0,4 et entre Mo et V entre 0,01 et 0,3.

13. Procédé selon la revendication 1, caractérisé en ce qu'on revêt les composés obtenus d'une enveloppe protectrice minérale ou organique.

14. Utilisation des pigments de vanadate de bismuth obtenus selon la revendication 1 pour la coloration de matières organiques de haut poids moléculaire.

15. Matière organique de haut poids moléculaire contenant un pigment obtenu selon la revendication 1.
